**Europäisches Patentamt**

**European Patent Office**

**Office européen des brevets**

(11) Veröffentlichungsnummer: **0 030 365**
A2

## (12) EUROPÄISCHE PATENTANMELDUNG

(21) Anmeldenummer: **80107567.2**

(22) Anmeldetag: **03.12.80**

(51) Int. Cl.³: **A 47 B 9/00,** A 47 B 13/06

(30) Priorität: **06.12.79 DE 2949185**

(43) Veröffentlichungstag der Anmeldung: **17.06.81 Patentblatt 81/24**

(84) Benannte Vertragsstaaten: **AT BE CH FR GB IT LI LU NL SE**

(71) Anmelder: **SIEMENS AKTIENGESELLSCHAFT Berlin und München, Postfach 22 02 61, D-8000 München 22 (DE)**

(72) Erfinder: **Pichler, Klaus, Ing. grad., Am Steigacker 14, D-8156 Otterfing (DE)**

(54) **Tischgestell für einen höherverstellbaren Tisch.**

(57) Bei Tischen für Bürogeräte ist es erforderlich, die Höhe des Tisches zu verstellen und damit der Körpergrösse des Benutzers anzupassen. Die Veränderung der Höhe des Tisches erfolgt durch ein Tischgestell, das aus einer Querträgerschiene (1), aus zwei an der Querträgerschiene (1) starr befestigten Führungssäulen (2) und in den Führungsschienen geführten Tischbeinen (3) besteht. Um eine einwandfreie Führung der Tischbeine (3) in den Führungssäulen (2) in Querrichtung (QR) zu erreichen, sind zwischen den Längsflächen (17, 18) der Tischbeine (3) und der Führungssäulen (2) Gleitnippel (15, 16) angeordnet.

EP 0 030 365 A2

SIEMENS AKTIENGESELLSCHAFT      Unser Zeichen
Berlin und München             VPA  79 P 2 0 0 2 EUR

## Tischgestell für einen höhenverstellbaren Tisch

Die Erfindung bezieht sich auf ein Tischgestellt für einen höhenverstellbaren Tisch aus einer Querträgerschiene, über der eine Tischplatte angeordnet ist, und aus an den Enden der Querträgerschiene angeordneten Führungssäulen für die Tischbeine.

Höhenverstellbare Arbeitstische werden z.B. bei Bildschirmarbeitsplätzen eingesetzt. Auf dem Arbeitstisch werden dann Datensichtgeräte, Tastaturen usw. angeordnet. Aus anthrometischen Gründen müssen diese Tische dem Benutzer genügend Beinraum bieten und sollen deshalb im Beinraum keine Quertraversen, Verbindungsschienen oder ähnliches aufweisen. Die Säulenführung − in vertikaler Richtung mittels einer Verstellmechanik verschiebbaren Tischbeine soll aus einfachen konstruktiven Elementen aufgebaut und das Führungsspiel leicht einstellbar sein.

Il 1 Pe /29.11.79

Die der Erfindung zugrundeliegende Aufgabe besteht darin, ein Tischgestell für einen höhenverstellbaren Tisch anzugeben, der die oben angegebenen Anforderungen erfüllt. Diese Aufgabe wird bei einem Tischgestell der oben angegebenen Art dadurch gelöst, daß die Führungssäulen mit der Querträgerschiene starr verbunden sind, daß in jeder Führungssäule ein Tischbein führbar ist und daß zwischen den beiden Längsflächen jedes Tischbeines und den beiden Längsflächen der zugeordneten Führungssäulen Gleichtnippel angeordnet sind.

Eine einwandfreie Führung des Tischbeines in der Führungssäule erhält man dann, wenn an jeder Längsfläche des Tischbeines an deren oberen Enden jeweils ein Gleitnippel und an den Längsflächen der Führungssäule an deren unteren Ende jeweils weitere Gleitnippel angeordnet sind.

Der Abstand zwischen den Längsflächen des Tischbeines und der Führungssäule kann auf einfache Weise dadurch eingestellt werden, daß jedes Tischbein aus zwei Viereckrohren besteht, deren Abstand voneinander in Querrichtung des Tisches einstellbar ist.

Zur Einstellung des Abstandes der Viereckrohre voneinander kann auf einfache Weise jeweils eine Lasche an jedem Viereckrohr befestigt sein, die miteinander verschraubbar sind. Dabei können die Laschen gegeneinander dadurch verschoben werden, daß in einer der Laschen Langlöcher vorgesehen sind, durch die Schrauben hindurchsteckbar sind, um im Gewinde eingeschraubt werden zu können, die in der anderen Lasche angeordnet sind.

Falls die Viereckrohre am unteren Ende auf einem Gerätefuß stehen, kann die Verbindung des Gerätesfußes mit jedem Viereckrohr mit Hilfe einer durch den Gerätefuß hindurchgehenden Schraube erfolgen, die in einem am unteren Ende des Viereckrohres befestigten Gewindelasche hineinschraubbar ist. Dann kann die Veränderung des Abstandes der beiden Viereckrohre voneinander auf einfache Weise dadurch erreicht werden, daß die Öffnungen in dem Gerätefuß Langlöcher sind und damit die Lage der Schrauben in Richtung des Gerätefußes verändert werden kann.

Die Führungssäulen können sehr einfach aufgebaut werden, wenn sie aus einem kastenförmig gebogenen Stahlblech hergestellt werden, deren offene Seiten durch angeschweißte Stegbleche versteift werden. Entsprechend ergibt sich ein einfacher Aufbau für die Querträgerschiene, wenn auch diese aus einem kastenförmig gebogenen Stahlblech besteht, dessen zur Tischplatte offene Seite mit Stegblechen versteift ist.

Die starre Verbindung zwischen der Querträgerschiene und den am Ende angeordneten Führungssäulen wird über Verbindungswinkel und Knotenbleche hergestellt.

Anhand eines Ausführungsbeispiels, das in den Figuren dargestellt ist, wird die Erfindung weiter erläutert. Es zeigen:

Fig.1 eine Ansicht des Tischgestelles,

Fig.2 einen Längsschnitt durch eine Führungssäule und ein Tischbein,

Fig.3 einen Querschnitt an der Stelle A-B der Fig.1 durch eine Führungssäule und ein Tischbein.

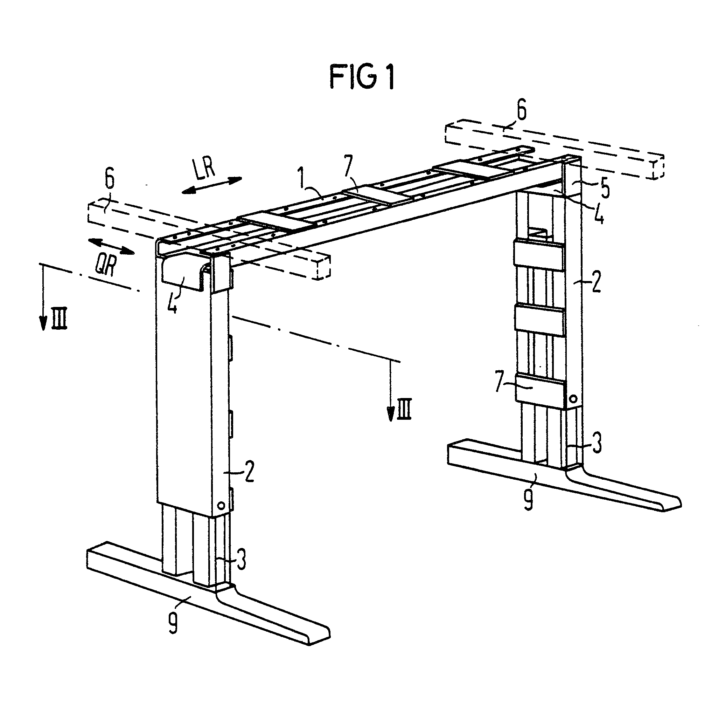

Figur 1 zeigt den Aufbau eines Tischgestelles, bei dem die Tischplatte und die Seitenvergleitungen weggelassen worden sind. Angedeutet sind lediglich zwei Tischplattenträger 6, auf denen die Tischplatte befestigt wird. Bei der fol-

0030365

79 P 2 0 8 2 EUR

genden Beschreibung wird als Längsrichtung des Tisches die Richtung der Pfeile LR bezeichnet und als Querrichtung des Tisches die Richtung, die durch die Pfeile QR angegeben ist. Flächen die in Längsrichtung LR liegen werden als Längsflächen benannt. Die Tischplattenträger 6 liegen z.B. in Querrichtung QR.

Das Tischgestell besteht nach Figur 1 aus einer Querträgerschiene 1, zwei/den Enden der Querträgerschiene 1 angeordneten Führungssäulen 2 und jeweils einem in jeder Führungssäule 2 angeordneten Tischbein 3. Die Querträgerschiene 1 liegt in Längsrichtung LR und ist mit den Führungssäulen 2 über Verbindungswinkel 4 und Knotenbleche 5 starr verbunden. Die Querträgerschiene 1 nimmt die beiden Tischplattenträger 6 für die Befestigung der Tischplatte auf.

Sowohl die Querträgerschiene 1 als auch die beiden Führungssäulen 2 können kastenförmig aus Stahlblech gebogen sein und an ihren offenen Seiten mit aufgeschweißten Stegblechen 7 versteift sein. Dabei ist es zweckmäßig, daß die offenen Seiten der Führungssäulen 2 nach innen zeigen, also in Querrichtung liegen.

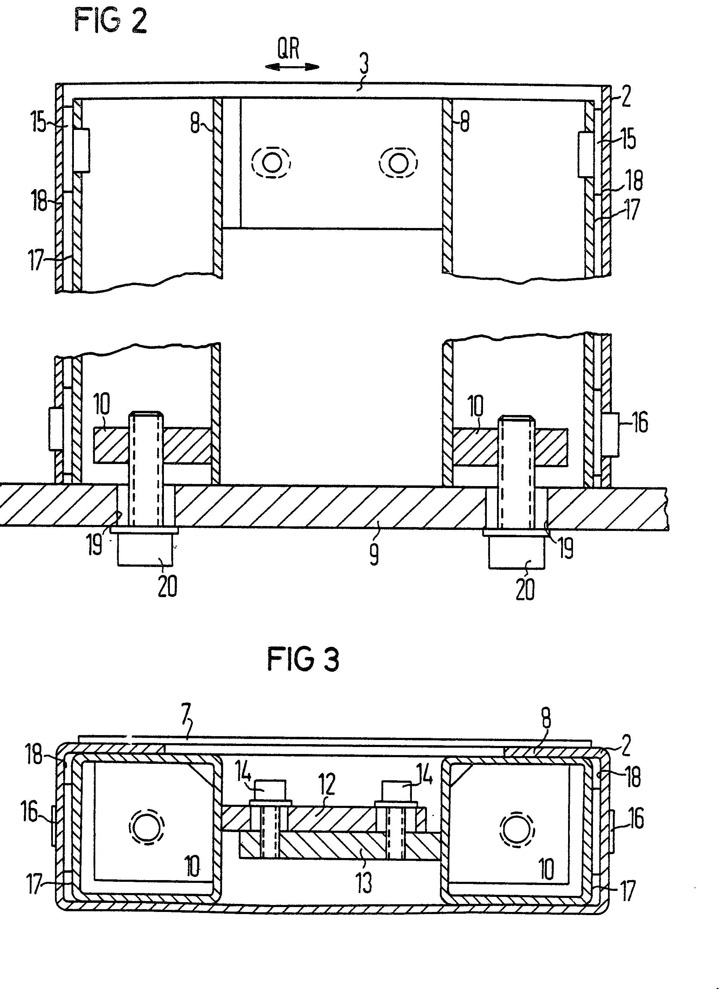

Der Aufbau der Führungssäulen 2 und der Tischbeine 3 ergibt sich aus Fig.2 und Fig.3. Erforderlich ist, daß die Tischbeine 3 in den Führungssäulen 2 so geführt werden, daß das Führungsspiel in Querrichtung QR möglichst genau einstellbar ist, da dies die Belastungsrichtung der Tischplatte durch den Benutzer ist. Dieses genaue Führungsspiel in Querrichtung QR wird auf einfache Weise mit Hilfe von Gleitnippeln 15,16 erreicht, die zwischen den Längsflächen 17 des Tischbeines 3 und den Längsflächen 18 der Führungssäule 2 angeordnet werden. Diese Gleitnippel können aus Kunststoff bestehen. Dabei kann die Führung des Tischbeines 3 im oberen Bereich der Führungssäule 2 durch Gleitnippel 15 erreicht werden, die am oberen Ende des Tischbeines 3 in beiden Längsflächen 17 befestigt sind. Die Führung im unteren Ende der Führungssäule wird mit Hilfe von Gleitnippeln 16 erreicht, die an den Längsflächen 18 der Führungssäule 2 befestigt sind.

Um den Abstand der Längsflächen 17,18 der Führungssäule 2 und des Tischbeines 3 einstellen zu können, besteht das Tischbein 3 aus zwei in Querrichtung QR angeordneten Viereckrohren 8, die z.B. aus Stahl hergestellt sein können. An jedem Viereckrohr 8 ist jeweils eine Lasche 12,13 befestigt, z.B. angeschweißt. Diese Laschen 12, 13 können miteinander durch Schrauben 14 verschraubt werden. Um den Abstand verändern zu können, ist es dabei zweckmäßig, in der einen Lasche 12 Längslöcher anzuordnen und in der anderen Lasche 13 Gewindebohrungen vorzusehen. Dann können die Schrauben 14 durch die Längslöcher in der Lasche 12 hindurchgesteckt werden und in die Gewindebohrungen der Lasche 13 eingeschraubt werden. Vor der Verschraubung ist dann abhängig von der Breite der Längslöcher eine Veränderung der beiden Viereckrohre 8 in der Führungsrolle 2 möglich. Der Abstand der vier Eckrohre 8 und damit der Abstand der Längsflächen 17 der Viereckrohre 8 zu den Längsflächen 18 der Führungssäule wird so eingestellt, daß die Längsflächen satt an den Gleitnippeln 15,16 anliegen und damit ein optimales Führungsspiel für das Tischbein 3 in Querrichtung, d.h. in der Belastungsrichtung der Tischplatte durch den Benutzer erreicht wird.

Die Viereckrohre 8 können am unteren Ende auf einem Gerätefuß 9 stehen und an diesen befestigt sein. Dazu ist in

0030365

79 P 2 0 8 2 EUR

jedem Führungsrohr 8 eine Gewindelasche 10 befestigt, z.B. angeschweißt. In dem Gerätefuß 9 befinden sich in Langlöchern 19 durch die jeweils eine Schraube 20 hindurchgesteckt wird und in die Gewindelaschen 10 eingeschraubt werden. Die Veränderung des Abstandes der Viereckrohre 8 voneinander wird wiederum mit Hilfe der Langlöcher 19 erreicht.

In der Längsrichtung LR der Tischplatte ist das Führungsspiel durch die Fertigungsmögliche Zuordnung von Viereckrohr 8 und Führungsrolle 2 gegeben, doch ist hier eine Einstellmöglichkeit nicht erforderlich.

Die offene Seite der Querträgerschiene 1 wird zweckmäßigerweise zur Tischplatte hin angeordnet. Damit ergibt sich eine nach oben offene Wanne, in die ebenso wie in den inneren Zwischenraum der beiden voneinander angeordneten Viereckrohre 8 die Antriebsmechanik für die Höhenverstellung aufgenommen werden kann. Diese Antriebsmechanik ist nicht dargestellt und kann auf bekannte Weise aufgebaut sein.

10 Patentansprüche
3 Figuren

0030365

Patentansprüche

1. Tischgestell für einen höhenverstellbaren Tisch aus
einer Querträgerschiene, über der eine Tischplatte angeordnet ist und aus an den Enden der Querträgerschiene angeordneten Führungssäulen für die Tischbeine, d a d u r c h
g e k e n n z e i c h n e t, daß die Führungssäulen (2)
mit der Querträgerschiene (1) starr verbunden sind, daß
in jeder Führungssäule (2) ein Tischbein (3) führbar ist
und daß zwischen den Längsflächen (17) jedes Tischbeines
(3) und den Längsflächen (18) der zugeordneten Führungssäule (2) Gleitnippel (15, 6) angeordnet sind.

2. Tischgestell nach Anspruch 1, d a d u r c h   g e -
k e n n z e i c h n e t, daß an jeder Längsfläche (17)
des Tischbeines (3) an deren oberen Enden jeweils ein
Gleitnippel (15) befestigt ist, und daß an jeder Längsfläche (18) der Führungssäule (2) an deren unteren Ende
gegenüber den Längsflächen (17) des Tischbeines (3) jeweils ein weiterer Gleitnippel (16) befestigt ist.

3. Tischgestell nach Anspruch 1 oder 2, d a d u r c h
g e k e n n z e i c h n e t, daß jedes Tischbein (3)
aus zwei in Querrichtung (QR) liegenden Viereckrohren
(8) bestehen, deren Abstand voneinander und damit zu den
Längsflächen (18) der Führungssäule (2) einstellbar ist.

4. Tischgestell nach Anspruch 3, d a d u r c h   g e k e n n -
z e i c h n e t, daß zur Einstellung des Abstandes der
Viereckrohre (8) voneinander jeweils eine Lasche (12,13)
an jedem Viereckrohr (8) befestigt ist und die Laschen
miteinander verschraubbar sind.

5. Tischgestell nach Anspruch 4, d a d u r c h   g e - k e n n z e i c h n e t, daß in einer der Laschen (12) Langlöcher angeordnet sind, durch die die Schrauben (14) zur anderen Lasche (13) hindurchgeführt sind.

6. Tischgestell nach einem der Ansprüche 3 bis 5, d a - d u r c h   g e k e n n z e i c h n e t, daß jedes der Viereckrohre (8) am unteren Ende auf einem Gerätefuß (9) steht und die Verbindung des Gerätesfußes (9) mit dem Viereckrohr (8) mit Hilfe eines durch den Gerätefuß (9) hindurchgesteckten Schraube (20) erfolgt, die in eine am unteren Ende des Viereckrohres (8) befestigten Gewindelasche (10) einschraubbar ist.

7. Tischgestell nach Anspruch 6, d a d u r c h   g e k e n n - z e i c h n e t, daß die Öffnungen (19) im Gerätefuß (9), durch die die Schrauben (20) hindurchgesteckt werden, als Langlöcher ausgeführt sind.

8. Tischgestell nach einem der vorhergehenden Ansprüche, d a d u r c h   g e k e n n z e i c h n e t, daß jede Füh- rungssäule (2) aus einem kastenförmig gebogenen Stahlblech besteht, dessen offene Seite mit angeschweißten Stegblechen (7) versteift ist.

9. Tischgestell nach einem der vorhergehenden Ansprüche, d a d u r c h   g e k e n n z e i c h n e t, daß die Quer- trägerschiene (1) aus einem kostenförmig gebogenen Stahlblech besteht, dessen zur Tischplatte offene Seite mit Stegblechen (7) versteift ist.

10.Tischgestell nach einem der vorhergehenden Ansprüche, d a d u r c h   g e k e n n z e i c h n e t, daß die je- weils an den Enden der Querträgerschiene (1) angeordneten

0030365

79 P 2 0 8 2 EUR

Führungssäulen (2) über Verbindungswinkel (4) und Kantenbleche (5) miteinander starr verbunden sind.

FIG 1

FIG 2

FIG 3